# EUROPÄISCHE PATENTSCHRIFT

(11) **EP 2 873 617 B1**
(45) Veröffentlichungstag und Bekanntmachung des Hinweises auf die Patenterteilung: **01.07.2020**
(21) Anmeldenummer: 13005342.4
(22) Anmeldetag: 13.11.2013
(51) Int. Cl.: B64D 15/12, B64D 15/16

(54) **Vorrichtung und Verfahren zur Enteisung und/oder Vermeidung von Eisbildung sowie Profilkörper und Luftfahrzeug mit einer solchen Vorrichtung**
Device and method for de-icing and/or avoiding ice-buildup and profiled body and aircraft equipped with such a device
Dispositifs et procédé de dégivrage et/ou de prévention contre la formation de glace ainsi que corps profilé et aéronef dotés d'un tel dispositif

(43) Veröffentlichungstag der Anmeldung: 20.05.2015
(73) Patentinhaber: Airbus Defence and Space GmbH, 85521 Ottobrunn (DE)
(72) Erfinder: Strobl, Tobias, 80333 München (DE); Storm, Stefan, 85716 Unterschleißheim (DE); Raps, Dominik, 86633 Neuburg (DE); Hauk, Tobias, 82008 Unterhaching (DE)
(74) Vertreter: Kastel, Stefan

(56) Entgegenhaltungen:
- CH-A- 233 496
- DE-A1- 2 203 642
- US-A- 5 921 502
- US-A1- 2012 091 276
- US-B1- 6 283 411

## Beschreibung

Die Erfindung betrifft eine Vorrichtung zur Enteisung und/oder Vermeidung von Eisbildung für ein Luftfahrzeug, mit einer Wärmeabgabeeinrichtung zur Abgabe von Wärme an einem Oberflächenbereich des Luftfahrzeuges. Weiter betrifft die Erfindung einen mit einer solchen Vorrichtung versehenen aerodynamischen Profilkörper für ein Luftfahrzeug, wie z.B. einen Flügel oder einen Teil eines Flügels, einen Triebwerkseinlauf oder eine Flosse eines Leitwerks. Weiter betrifft die Erfindung ein Luftfahrzeug mit einer solchen Vorrichtung und/oder einem solchen Profilkörper. Schließlich betrifft die Erfindung ein Verfahren zur Enteisung eines Oberflächenbereichs eines Luftfahrzeugs und/oder Vermeidung von Eisbildung an dem Oberflächenbereich des Luftfahrzeuges, durch Einbringung von Wärmeenergie an dem Oberflächenbereich.

Eis bildet sich an exponierten Stellen von Luftfahrzeugen wie Vorderkanten von Flügeln, Leitwerken, horizontalen Stabilisatoren oder auch Triebwerkseinläufen, wenn das Luftfahrzeug, wie beispielsweise ein Flugzeug, durch eine Wolke fliegt, die unterkühlte Wassertröpfchen enthält oder Tropfen/Feuchtigkeit auf eine unterkühlte Luftfahrzeugstruktur treffen. Wenn eine Eisschicht wächst, beeinträchtigt sie die Luftströmung über der betroffenen Oberfläche. Wenn die Schicht groß genug wird, können z.B. Tragprobleme oder Handhabungsprobleme für das Luftfahrzeug entstehen.

Es sind bereits Eisschutzsysteme bei Luftfahrzeugen im Einsatz, um eine solche Eisbildung zu vermeiden. Die meisten Eisschutzsysteme sind als Anti-Eissysteme zum Vermeiden einer Eisbildung ausgebildet. Hierzu sind in der Regel Strukturintegrierte Heizsysteme vorgesehen. Während des Fluges unter Vereisungsbedingungen werden Flügelkanten z. B. mit heißer Abzweigluft oder Verdichterzapfluft (sog. bleed air) oder durch elektrische Heizungen in den Flügelkanten beheizt.

Zudem sind, vor allem in kleineren Flugzeugen, pneumatisch betriebene Enteisungsvorrichtungen im Einsatz, welche an der Flügelvorderkante integrierte Gummimatten bzw. Gummischläuche in regelmäßigen Abständen aufblasen, wodurch ein Ablösen von angelagertem Eis erzielt wird.

Dabei sind die herkömmlichen Enteisungsmaßnahmen mit einem hohen energetischen Aufwand während des Fluges verbunden. An energetischem Aufwand für das Freimachen von Oberflächen des Luftfahrzeuges von Eis fallen etwa 240 bis 260 kW an Abzweigluftleistung oder ca. 130 bis 150 kW elektrischer Heizleistung für eine zu enteisende Fläche von ca. 12 bis 15 m² an. Diese Daten entsprechen im Falle von Abzweigluft Flächenleistungen von ca. 18,5 kW/m² bzw. etwa 10 kW/m² bei elektrischer Heizung.

Bekannte Systeme oder Vorrichtungen zur Entfernung von Eisakkumulationen im Flug auf aerodynamisch effizienten Oberflächen lassen sich generell unterteilen in pneumatische, thermische und mechanische Enteisungssysteme. So ist in der EP 0 658 478 B1 eine Vorrichtung zur pneumatischen Enteisung von Oberflächen an Luftfahrzeugen bekannt. Aus der US 6 702 233 B1 ist eine Vorrichtung zur Enteisung beziehungsweise Vermeidung von Eisbildung an Oberflächenbereichen von Luftfahrzeugen unter Verwendung von warmer Abzweigluft aus dem Triebwerk bekannt.

Aus der DE 10 2010 045 450 B4 ist eine Anordnung zur Enteisung eines Oberflächenbereichs eines Luftfahrzeuges durch Bestrahlung des Oberflächenbereichs mit einem Laser bekannt.

Andere Vorrichtungen zur Enteisung und/oder Vermeidung von Eisbildung verwenden eine thermische Enteisung unter Verwendung von elektrischen Heizelementen. Insbesondere ist es bekannt, basierend auf der großflächigen Wärmezufuhr durch eine elektrothermische Heizmatte das Vereisen der Oberfläche eines Flügelprofils zu verhindern. Ein Beispiel für ein derartiges thermisches Enteisungssystem ist in der EP 1 017 580 B1 beschrieben.

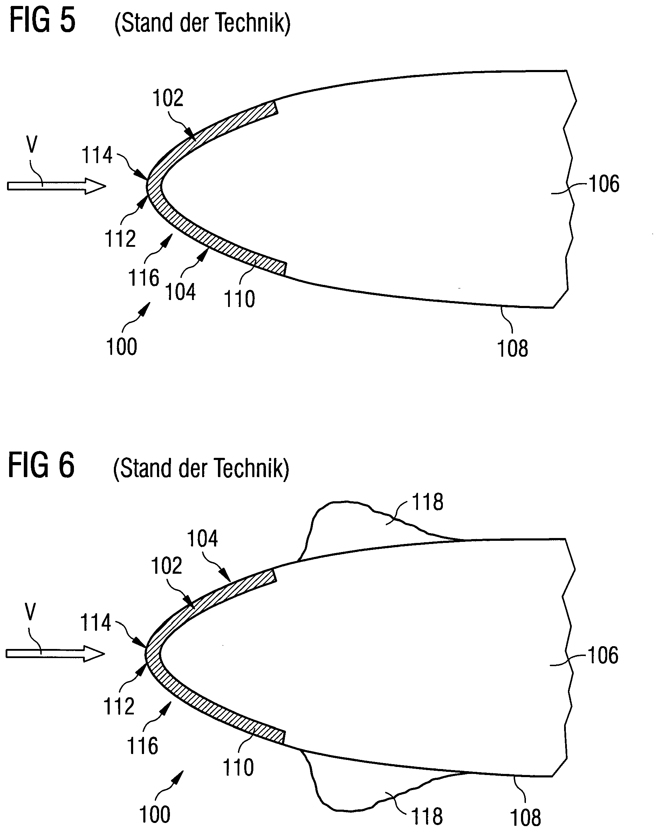

Im folgenden wird die Wirkweise einer derartigen bekannten Vorrichtung zur Enteisung und/oder Vermeidung von Eisbildung für ein Luftfahrzeug, welche die Merkmale des Oberbegriffs des beigefügten Anspruchs 1 aufweist, anhand der Darstellungen in den Figuren 5 und 6 näher erläutert.

Die Figuren 5 und 6 zeigen einen aerodynamischen Profilkörper 108, wie beispielsweise einen Flügel eines als Flugzeug ausgebildeten Luftfahrzeuges mit einer bekannten Vorrichtung 100 zur Enteisung und/oder Vermeidung von Eisbildung, welche Vorrichtung 100 mit einer Wärmeabgabeeinrichtung 102 zur Abgabe von Wärme an einen Oberflächenbereich 104 des Luftfahrzeuges 106 versehen ist. Die Wärmeabgabeeinrichtung 102 weist eine großflächig an dem Oberflächenbereich 104 angeordnete Heizmatte 110 auf, die den gesamten Oberflächenbereich 104 aufheizt. So kann beispielsweise der gesamte um die Vorderkante 112 beziehungsweise um eine Stagnationslinie 114 herum liegende Oberflächenbereich 104 von Eis freigehalten werden.

Die Fig. 5 zeigt eine Prinzipskizze eines voll-evaporierend betriebenen, elektro-thermischen Enteisungssystems 116 als Beispiel für die bekannte Vorrichtung 100 zur Enteisung und/oder Vermeidung von Eisbildung, welches Enteisungssystem 116 mit einer Heizmatte 110 im Bereich der Vorderkante 112 eines Flügels zur großflächigen und vollständigen Verhinderung von Eisakkumulation durch auf der Oberfläche des Flügelprofils auftreffende Wassertropfen versehen ist.

Basierend auf der großflächigen Wärmezufuhr durch die elektro-thermische Heizmatte 110 kann das Vereisen der Oberfläche des Flügelprofils auf folgende zwei Möglichkeiten verhindert werden. Dabei wird davon ausgegangen, dass das elektro-thermische Enteisungssystem 116 permanent betrieben wird:
- Wie in der Fig. 5 dargestellt, werden die auf dem Flügelprofil - Profilkörper 108 - auftreffenden Wassertropfen im voll-evaporierenden Enteisungsmodus vollständig verdampft.
- Wie in Fig. 6 dargestellt, wird das Anhaften und Erstarren der Wassertropfen zu Eisakkumulationen an der Vorderkante 112 des Profils des Profilkörpers 108 durch einen "Running-wet"-Enteisungsmodus verhindert. Die Oberflächentemperatur der Vorderkante 112, welche aus dem Beheizen mittels dieses Enteisungsmodus resultiert, ist geringer als im voll-evaporierenden Enteisungsmodus. Dadurch wird das Erstarren der auftreffenden Wassertropfen zu Eis zunächst an der beheizten FlügelVorderkante 112 verhindert. Die Wassertropfen laufen am Flügelprofil des Profilkörpers 108 entlang in Richtung der Profilhinterkante und erstarren in weniger kritischen, nicht beheizten Bereichen auf dem Flügelprofil zu Eis 118.

Bei den bekannten elektro-thermischen Enteisungssystemen 116 muss daher entweder eine sehr hohe Energie aufgewandt werden, um den voll-evaporierenden Enteisungsmodus durchzuführen, oder es kommt bei geringerem Energieeinsatz zur Eisbildung an weniger kritischen nicht-beheizten Bereichen.

Weiter sind auch Vorrichtungen zur Enteisung und/oder Vermeidung von Eisbildung bekannt, die als hybride Vorrichtungen mehrere Möglichkeiten zur Enteisung, wie insbesondere den Einsatz thermischer Energie und mechanischer Verformungen nutzen. Beispiele von bekannten hybriden Enteisungssystemen sind aus den folgenden Literaturstellen bekannt:
- G. Fortin, M. Adomou, J. Perron, "Experimental Study of Hybrid Anti-Icing Systems Combining Thermoelectric and Hydrophobic Coatings", SAE International, Warrendale, Pa, 2011: Diese Publikation beschäftigt sich mit einem elektro-thermischen Anti-Eis-System in Kombination mit Eis abweisenden Oberflächenbeschichtungen zur Reduktion des Energiebedarfs bei der Enteisung. Die Wärmezufuhr erfolgt bei diesem System großflächig, um die gesamte, von Eisaufwuchs betroffene Oberfläche zu schützen. Der Nachteil des Systems ist somit die Tatsache, dass durch den permanenten Betrieb des großflächig anzubringenden Anti-Eis-Systems im Bereich der gesamten Flügelvorderkante ein grundsätzlich hoher Energieverbrauch auftritt.
- US 5 921 502 A und US 2012 / 0 091276 A1 sowie K. Al-Khalil, T. Ferguson, D. Phillips, "A Hybrid Anti-icing Ice Protection System", AIAA 97-0302 (1997): Diese Publikationen befassen sich mit einem hybriden Enteisungssystem der Firma Cox & Company, Inc. welches sich aus einem thermischen "Running-wet"-Anti-Eis-Subsystem sowie einem Subsystem auf Basis von elektro-expulsiven Aktuatoren (EMEDS) zusammensetzt. Das thermische Subsystem bedeckt den Bereich des Tropfenaufschlags an der Flügelvorderkante in großflächiger Weise entweder teilweise oder auch vollständig. Somit lässt sich für das thermische Subsystem der Nachteil anführen, dass ein relativ großer Flächenanteil des Flügelvorderkantenbereichs beheizt werden muss, um die Wassertropfen weiter stromabwärts zu transportieren. Dort können die zu einer Eisakkumulation erstarrten Tropfen dann mittels der EMEDS-Aktuatoren periodisch entfernt werden. Ein weiterer Nachteil des bekannten hybriden Systems ist zudem die Größe der EMEDS-Aktuatoren.
- Auch bei dem aus der US 6 283 411 B1 bekannten Enteisungssystem ist eine großflächige thermische Heizung mit einem voluminösen und schweren mechanischen Aktuator kombiniert.

Aus CH 233 496 A, das alle Merkmale des Oberbegriffs des Anspruchs 1 offenbart, und DE 22 03 642 A1 sind jeweils Heizvorrichtungen und deren Herstellungsverfahren bekannt, die bei aerodynamischen Profilen verwendet werden können.

Generell ist bei allen bekannten Systemen ein recht hoher Energieeinsatz zur Enteisung oder zur Vermeidung von Eisbildung notwendig.

Der Erfindung liegt daher die Aufgabe zugrunde, eine Vorrichtung und ein Verfahren zur Enteisung und/oder Vermeidung von Eisbildung zu schaffen, womit eine Enteisung und/oder eine Vermeidung von Eisbildung mit einem geringeren Energieaufwand ermöglicht ist.

Gemäß einem Aspekt schlägt die Erfindung eine Vorrichtung mit den Merkmalen des Anspruches 1 vor. Ein mit einer derartigen Vorrichtung versehener aerodynamischer Profilkörper, wie beispielsweise ein Teil eines Tragflügels oder einer Flosse oder eines Triebwerkseinlauf eines Luftfahrzeuges, sowie ein mit einer derartigen Vorrichtung oder einem derartigen Profilkörper versehenes Luftfahrzeug sind Gegenstand von Nebenansprüchen.

Gemäß einem weiteren Aspekt schlägt die Erfindung ein Verfahren zur Enteisung und/oder Vermeidung von Eisbildung für ein Luftfahrzeug mit den Schritten des weiteren Nebenanspruchs vor.

Vorteilhafte Ausgestaltungen der Erfindung sind Gegenstand der Unteransprüche. Gemäß einem ersten Aspekt schafft die Erfindung eine Vorrichtung zur Enteisung und/oder Vermeidung von Eisbildung für ein Luftfahrzeug, mit einer Wärmeabgabeeinrichtung zur Abgabe von Wärme an einen Oberflächenbereich des Luftfahrzeuges, wobei die Wärmeabgabeeinrichtung zur linienförmigen Wärmeabgabe zwecks Erzeugung einer Sollbruchstelle oder Sollbruchlinie in sich auf dem Oberflächenbereich ansammelndem Eis ausgebildet istund mit einer Verformungseinrichtung zur Verformung zumindest eines Teils der Oberfläche des Oberflächenbereichs, wobei die Verformungseinrichtung wenigstens einen piezoelektrischen Aktuator oder eine Anordnung von piezoelektrischen Aktuatoren zur Verformung einer Oberfläche des Oberflächenbereichs umfasst, wobei der wenigstens eine piezoelektrische Aktuator als d₃₃-Stapelaktuator ausgebildet ist, dessen Ausdehungsrichtung in Spannweitenrichtung ausgerichtet ist.

Es ist bevorzugt, dass die Vorrichtung als hybride Vorrichtung zur Enteisung und/oder Vermeidung von Eisbildung mittels thermischer und mechanischer Energie ausgebildet ist.

Es ist bevorzugt, dass eine Eisdetektionseinrichtung vorgesehen ist, die ausgebildet ist, anhand von durch die Wärmeabgabeeinrichtung und/oder durch wenigstens einen Aktuator erhaltenen Informationen eine Akkumulation von Eis zu detektieren.

Insbesondere ist die Ausdehnungsrichtung mit zumindest einer Richtungskomponente in Richtung der Wärmeabgabelinie ausgerichtet.

Es ist bevorzugt, dass die Piezoaktuatoren und/oder der Heizdraht bzw. das Heizelement zur Detektion von Eisakkumulationen auf der Oberfläche verwendet werden können. Hierzu ist insbesondere eine Detektionseinrichtung vorgesehen, die anhand von mit diesen Elementen erhaltenen Parametern erfassen kann, ob eine Akkumulation von Eis vorliegt.

Die Wärmeabgabeeinrichtung der erfindungsgemäßen Vorrichtung ist zur Wärmeabgabe in Linienform ausgebildet, um so eine Sollbruchstelle oder Sollbruchlinie von sich auf dem Oberflächenbereich ansammelndem Eis zu erzeugen. Die Wärmeabgabeeinrichtung ist somit zur Wärmeabgabe entlang einer Wärmeabgabelinie ausgebildet. Je nach Energieeinsatz bildet sich entlang der Wärmeabgabelinie eine Schwächung von darauf befindlichem Eis aus, so dass das Eis aufgebrochen werden kann, oder es bildet sich entlang der Wärmeabgabelinie erst gar kein Eis aus, so dass sich allenfalls Eis an durch die Wärmeabgabelinie getrennten Abschnitten des Oberflächenbereichs ausbilden kann.

Bei einer besonders bevorzugten Ausgestaltung der erfindungsgemäßen Vorrichtung weist die Verformungseinrichtung eine erste Verformungseinheit auf einem ersten Abschnitt des Oberflächenbereichs und eine zweite Verformungseinheit auf einer durch die Wärmeabgabelinie von dem ersten Abschnitt getrennten zweiten Oberflächenbereich auf.

Bevorzugt umfasst die Verformungseinrichtung eine erste Verformungseinheit auf einer ersten Seite von einer Wärmeabgabelinie der Wärmeabgabeeinrichtung, zur Verformung eines auf der ersten Seite befindlichen ersten Abschnitts des Oberflächenbereichs und eine zweite Verformungseinheit auf der zweiten Seite von der Wärmeabgabelinie zur Verformung eines auf der zweiten Seite befindlichen zweiten Abschnitts des Oberflächenbereichs.

In einer besonders bevorzugten Ausgestaltung umfasst die Vorrichtung eine Eisadhäsionskräfte herabsetzende Oberflächenbeschichtung für den Oberflächenbereich.

Es ist bevorzugt, dass die Wärmeabgabeeinrichtung wenigstens einen Heizdraht und/oder wenigstens einen piezoelektrischen Aktuator, der derart ausgebildet und eingerichtet ist, dass er zur linienförmigen Wärmeabgabe fähig ist, aufweist.

Gemäß einem weiteren Aspekt schafft die Erfindung einen aerodynamischen Profilkörper für ein Luftfahrzeug, umfassend eine Vorrichtung zur Enteisung und/oder Vermeidung von Eisbildung nach der Erfindung oder deren vorteilhaften Ausgestaltungen.

Eine bevorzugte Ausgestaltung des Profilkörpers ist bevorzugt dadurch gekennzeichnet, dass die Wärmeabgabeeinrichtung zur linienförmigen Wärmeabgabe zwecks Erzeugung einer Sollbruchstelle oder Sollbruchlinie entlang einer oder nahe einer Stagnationslinie des Profilkörpers und/oder entlang einer Vorderkante des Profilkörpers ausgebildet ist.

Auch bei dem Profilkörper ist bevorzugt, dass eine Verformungseinrichtung vorgesehen ist, mittels der wenigstens ein Teil eines die Stagnationslinie und/oder die Vorderkante des Profilkörpers einschließenden Oberflächenbereichs des Profilkörpers zum Entfernen von Eis verformbar ist.

Besonders bevorzugt weist die Verformungseinrichtung die erste Verformungseinheit zur Verformung des ersten Abschnitts und die zweite Verformungseinheit zur Verformung des zweiten Abschnitts des Oberflächenbereichs auf, wobei die Abschnitte vorzugsweise durch die Stagnationslinie und/oder die Vorderkante des Profilkörpers voneinander getrennt sind.

Es ist bevorzugt, dass ein die Stagnationslinie und/oder die Vorderkante des Profilkörpers einschließender Oberflächenbereich mit einer Eisadhäsionskräfte herabsetzenden Oberflächenbeschichtung versehen ist.

Es ist bevorzugt, dass der Oberflächenbereich mit einer nanostrukturierten Oberfläche und/oder einer hydrophoben Oberfläche, insbesondere einer super-hydrophoben Oberfläche, versehen ist.

Gemäß einem weiteren Aspekt wird ein Luftfahrzeug mit einer Vorrichtung gemäß der Erfindung oder deren vorteilhaften Ausgestaltungen beziehungsweise mit einem aerodynamischen Profilkörper gemäß dem weiteren Aspekt der Erfindung oder dessen vorteilhaften Ausgestaltungen geschaffen.

Gemäß einem weiteren Aspekt schafft die Erfindung ein Verfahren zur Enteisung eines Oberflächenbereichs eines Luftfahrzeugs und/oder zur Vermeidung von Eisbildung an dem Oberflächenbereich des Luftfahrzeuges, durch Einbringung von Wärmeenergie an dem Oberflächenbereich, durch Einbringung von Wärme entlang einer Linie an dem Oberflächenbereich, um eine Sollbruchlinie oder Trennlinie in sich an dem Oberflächenbereich ansammelndem Eis bzw. sich dort akkumulierenden Wassertropfenansammlungen zu bilden und durch Verformen des Oberflächenbereichs mittels als d₃₃-Stapelaktuator ausgebildeter Piezo-Aktuatoren, deren Ausdehungsrichtung in Spannweitenrichtung ausgerichtet ist, um Eis entlang der Sollbruchlinie aufzubrechen und/oder um entlang der Sollbruchlinie oder Trennlinie aufgebrochenes Eis und/oder Wassertropfen zu entfernen.

Eine weitere bevorzugte Ausgestaltung des Verfahrens umfasst den weiteren Schritt:
Versehen oder Vorsehen des Oberflächenbereichs mit einer Eisadhäsionskräfte herabsetzenden Oberflächenbeschichtung und/oder einer Eisadhäsionskräfte herabsetzenden Oberflächenbeschaffenheit.

Der Erfindung liegt die Idee zugrunde, Wärme entlang einer Wärmeabgabelinie an einem zu enteisenden oder von Eis freizuhaltenden Oberflächenbereich abzugeben. Vorzugsweise wird Wärme entlang oder in der Nähe einer Stagnationslinie oder Staupunktslinie abgegeben. Hierdurch lässt sich mit relativ geringem Energieeintrag eine Sollbruchlinie oder eine Trennungslinie zwischen sich dennoch akkumulierenden Wassertropfenansammlungen oder Eisansammlungen schaffen. Die jeweils jenseits der Wärmeabgabelinie einsetzenden Eisansammlungen können so einfacher entfernt werden.

Besonders bevorzugt ist die Vorrichtung als hybrides Enteisungssystem ausgebildet. Die als hybrides Enteisungssystem ausgebildete Vorrichtung ermöglicht eine besonders energie-effiziente Enteisung von im Flug akkumuliertem Eis.

In einer bevorzugten Ausgestaltung der Vorrichtung wird eine Hybridisierung erreicht durch
a) gezielten Einsatz thermischer Energie - insbesondere durch einen Heizdraht - gekoppelt mit
b) einer Verformung der zu enteisenden Oberfläche - vorzugsweise durch einen oder mehrere piezoelektrische Aktuatoren - besonders bevorzugt weiter in Kombination mit
c) einer Eisadhäsionskräfte herabsetzenden Oberflächenbeschichtung - zum Beispiel mittels einer nanostrukturierten, superhydrophoben Oberfläche, wie zum Beispiel mittels Hydrobead.

In besonders bevorzugter Ausgestaltung ist die Vorrichtung zur Enteisung und/oder Vermeidung von Eisbildung durch ein hybrides System gebildet, welches durch eine Kombination von drei Subsystemen aus elektro-thermischem System, mechanischem System sowie einer Oberflächenbeschichtung gebildet ist. Eine Kombination aller drei Maßnahmen hat sich als besonders energie-effizient und als effektivste Lösung herausgestellt.

Aber auch die Kombination der linienförmigen Wärmeabgabe mit nur einem der weiteren Subsysteme - mechanische Verformung oder Oberflächenbeschichtung - bietet gegenüber bekannten Enteisungssystemen bereits erhebliche Energievorteile.

Auch ist der Einsatz der linienförmigen Wärmeabgabe entlang einer vordefinierten Wärmeabgabelinie bereits alleine für sich zur Enteisung interessant.

Besonders bevorzugt ist zur Verformung des Oberflächenbereichs zwecks mechanischem Entfernen von sich ansammelndem Eis eine Piezoaktuatorik vorgesehen.

Besonders ist eine Kombination einer linienförmig Wärme abgebenden Wärmeabgabeeinrichtung - wie insbesondere mit Hilfe eines Heizdrahtes - mit einer entsprechenden Oberflächenverformung - wie insbesondere durch Piezoaktuatorik - interessant. Eine derartige Kombination ermöglicht, dass das mechanisch von der Oberfläche gelöste Eis nicht weiter durch aerodynamische Kräfte der Strömung an der Oberfläche angepresst wird, sondern insbesondere durch eine am Stagnationspunkt thermisch eingebrachte, punktuelle Sollbruchstelle (bei zweidimensionaler Betrachtung) beziehungsweise durch die an der Stagnationslinie thermisch eingebrachte, linienförmige Sollbruchstelle in Spannweitenrichtung (bei dreidimensionaler Betrachtung) vollständig entfernt wird.

Weitere Vorteile der erfindungsgemäßen Vorrichtung - insbesondere in einer Ausgestaltung als hybrides System - sind ein geringerer Bauraum sowie eine Reduktion des Gewichts der Vorrichtung.

Insbesondere wenn die Vorrichtung strukturell in einen Profilkörper, wie zum Beispiel einem Flügelprofil eines Luftfahrzeuges, integriert wird, sind keine bewegten Teile vorhanden, wodurch eine hohe Lebensdauer erwartet werden kann.

Weiter ist der Einsatz eines Heizdrahtes bevorzugt. Dieser hat auch hinsichtlich einer Sensorik Vorteile. Ein vorhandener Heizdraht kann auch als Temperatursensor verwendet werden.

Weiter kann die Bildung von Eis auf der Oberfläche des Profilkörpers, wie beispielsweise eines Flügelprofils, auch mittels piezoelektrischen Aktuatoren, die zum Verformen der Oberfläche vorhanden sind, z.B. durch Verschiebungen der Resonanzfrequenzen beziehungsweise durch veränderte Schwingungsmoden detektiert werden.

Insofern können die eingesetzten Heizelemente und Aktuatoren auch als Sensoren verwendet werden. Zusätzliche Sensoren sind somit entbehrlich; und es kann weiter Gewicht eingespart werden.

Ausführungsbeispiele der Erfindung werden nachfolgend anhand der beigefügten Zeichnungen näher erläutert. Darin zeigt:
- Fig. 1: eine schematische, teilweise weggeschnittene Darstellung eines Luftfahrzeuges am Beispiel eines Flugzeuges, wobei die Vorderkanten von aerodynamischen Profilkörpern des Luftfahrzeuges, wie insbesondere Tragflügel und Flossen des Leitwerks mit einer Vorrichtung zur Enteisung und/oder Vermeidung von Eisbildung versehen sind.
- Fig. 2: eine schematische, teils perspektivische, teils geschnittene Darstellung durch einen aerodynamischen Profilkörper, beispielsweise zum Bilden eines Tragflügels des Luftfahrzeugs von Fig. 1, gezeigt im Schnitt entlang der Linie II-II von Fig. 1, wobei der Profilkörper mit der Vorrichtung zur Enteisung und/oder Vermeidung von Eisbildung versehen ist.
- Fig. 3: in schematischer geschnittener Darstellung einen Schnitt durch die Vorderkante des Profilkörpers von Fig. 2 mit der Vorrichtung zur Enteisung und/oder Vermeidung von Eisbildung ohne Betrieb einer Wärmeabgabeeinrichtung; und
- Fig. 4: eine Darstellung wie in Fig. 3 bei Betrieb der Wärmeabgabeeinrichtung;
- Fig. 5: eine Vorderkante eines Profilkörpers mit einer bekannten Vorrichtung zur Enteisung und/oder Vermeidung von Eisbildung in einem ersten Betriebsmodus; und
- Fig. 6: eine Darstellung vergleichbar zu Fig. 5, wobei die bekannte Vorrichtung in einem weiteren Betriebsmodus betrieben wird.

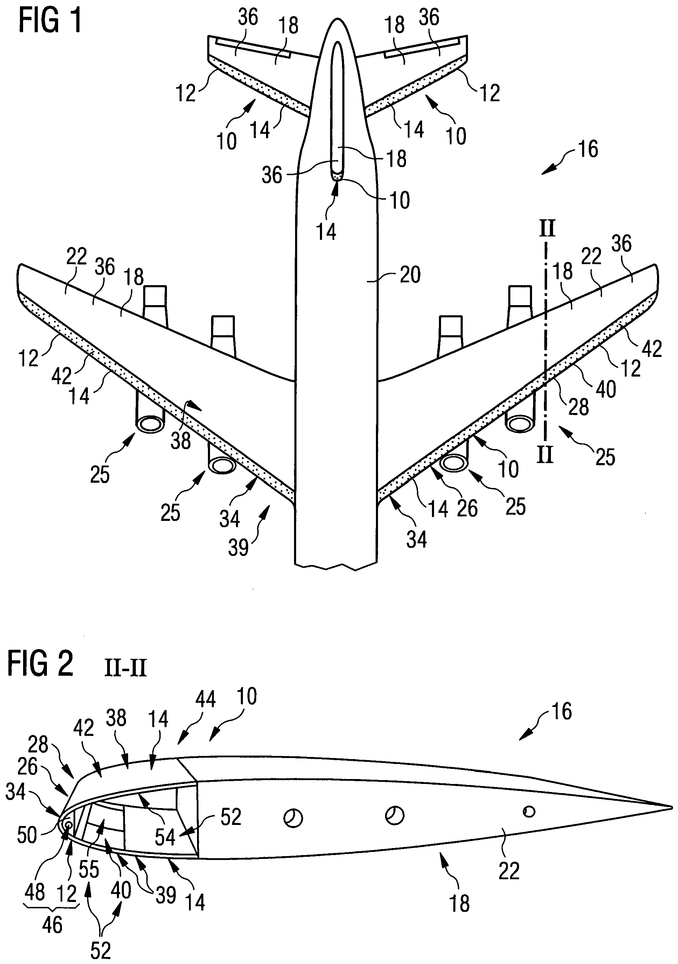

Im Folgenden wird eine Vorrichtung 10 zur Enteisung und/oder Vermeidung von Eisbildung an einem Oberflächenbereich 14 eines Luftfahrzeuges 16 anhand der Darstellung in den Fig. 1 und 2 näher erläutert.

Die Darstellungen in den Fig. 1 und 2 stellen lediglich Ausführungsbeispiele dar. Viele andere abweichende Ausgestaltungen der Vorrichtung 10 sind möglich.

Fig. 1 zeigt ein Luftfahrzeug 16 in Form eines Flugzeuges 20. Das Flugzeug 20 weist jeweils durch Profilkörper 18 gebildete Flügel 22, Leitwerksflossen 24, und Triebwerkseinläufe 25 auf. Im Bereich um die Vorderkanten 26 der Profilkörper 18 der Flügel 22 sowie der Leitwerksflossen 24 und der Triebwerkseinläufe 25 befindet sich der Oberflächenbereich 14, an dem sich im Flug Eis ansammeln kann.

Um dem entgegenzuwirken, weist das Luftfahrzeug 16 eine Vorrichtung 10 zur Enteisung und/oder Vermeidung von Eisbildung an dem jeweiligen Oberflächenbereich 14 auf. Die Vorrichtung 10 weist eine Wärmeabgabeeinrichtung 12 zur Abgabe von Wärme an den Oberflächenbereich 14 auf.

Anders als im zum Beispiel in den Fig. 5 und 6 gezeigten Stand der Technik ist die Wärmeabgabeeinrichtung 12 jedoch nicht zur großflächigen Wärmeabgabe ausgebildet, sondern zur linienförmigen Wärmeabgabe entlang einer Wärmeabgabelinie 28. Durch eine linienförmige Abgabe entlang der Wärmeabgabelinie 28 lässt sich an dem Oberflächenbereich 14 ansammelndes Eis 30 linienförmig schwächen und entlang der Wärmeabgabelinie 28 trennen. Insofern ist die Wärmeabgabeeinrichtung 12 zum Ausbilden einer Sollbruchstelle beziehungsweise einer Sollbruchlinie 32 für das Eis 30 ausgebildet.

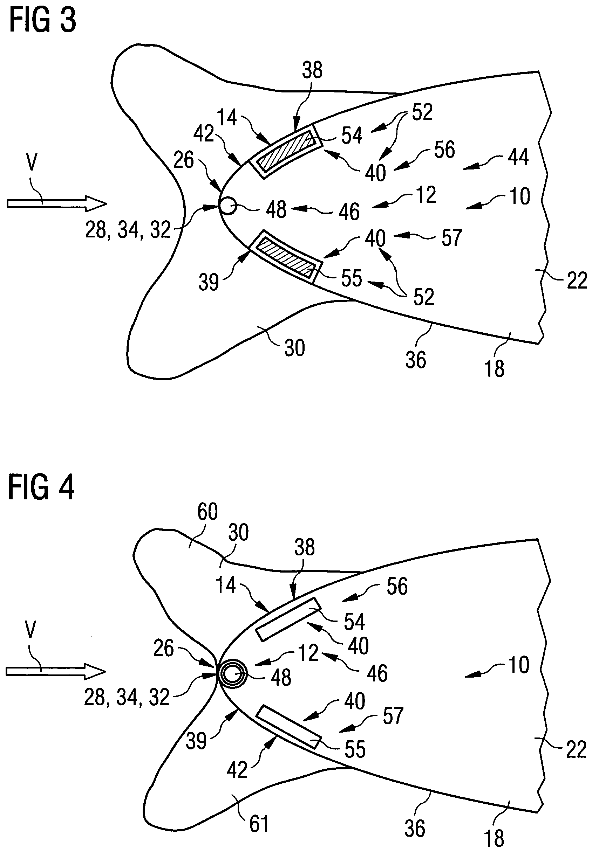

In bevorzugter Ausgestaltung ist die Wärmeabgabeeinrichtung 12 derart ausgebildet, dass die Wärme entlang der äußersten Vorderkante 26 und insbesondere entlang der Stagnationslinie 34 des jeweiligen aerodynamischen Profils 36 des jeweiligen Profilkörpers 18 linienförmig abgegeben wird. Die Stagnationslinie 34 ist die Linie, die die Staupunkte des aerodynamischen Profils 36 miteinander verbindet, oder mit anderen Worten diejenige Linie an einem aerodynamischen Profil 36, an der bei entsprechender Luftanströmung - in Fig. 3 und 4 dargestellt durch den Pfeil und den Geschwindigkeitsvektor v - in Strömungen zu den beiden Seiten beziehungsweise nach oben und nach unten hin aufgeteilt wird. Entlang der Stagnationslinie 34 baut sich im Flug der höchste Druck auf.

Die Vorrichtung 10 weist weiter Einrichtungen zur Entfernung von Eis und/oder zur Vermeidung einer Eisansammlung in oder an den durch die Wärmeabgabelinie 28 beziehungsweise Stagnationslinie 34 geteilten Abschnitten 38, 39 des Oberflächenbereich 14 auf.

Bei einer möglichen Ausgestaltung ist eine Verformungseinrichtung 40 zur Verformung von entsprechenden Teilen oder Abschnitten 38, 39 des Oberflächenbereichs 14 vorgesehen.

Bei einer anderen möglichen Ausgestaltung ist an dem Oberflächenbereich 14 eine Oberflächenbeschichtung 42 zur Verminderung von Eisadhäsionskräften vorgesehen.

Besonders bevorzugt sind sowohl die Verformungseinrichtung 40 als auch die die Eisadhäsionskräfte herabsetzende Oberflächenbeschichtung 42 vorgesehen, wie dies bei der in Fig. 2 gezeigten Ausführungsform der Fall ist.

Die Vorrichtung 10 ist gemäß einer bevorzugten Ausgestaltung als hybrides Enteisungssystem 44 ausgebildet, das eine Eisentfernung oder Vermeidung von Eisbildung unter Einsatz von wenigstens zwei Prinzipien durchführt.

Die Wärmeabgabeeinrichtung 12 ist vorzugsweise durch ein elektro-thermisches System 46 ausgebildet, das als Subsystem des hybriden Enteisungssystems 44 ausgebildet ist.

Die Wärmeabgabeeinrichtung 12 weist in einer bevorzugten Ausgestaltung einen Heizdraht 48 zur definierten Bildung einer Sollbruchstelle an der Stagnationslinie 34 des Profils 36 auf.

Wie insbesondere aus Fig. 2 ersichtlich, wird hierzu zum Aufbauen der Vorrichtung 10 im Bereich der Vorderkante 26 des Profilkörpers 18, der beispielsweise zum Bilden des Flügels 22 oder zum Bilden von Leitwerksflossen 24 dient, der elektro-thermische Heizdraht 48 entlang der Stagnationslinie 34 des Profils 36 eingebaut. In bevorzugter Ausgestaltung wird der Heizdraht 48 in eine Matrix aus Befestigungsmaterial, wie insbesondere eine Epoxidharzmatrix 50, eingebettet. Anstelle der Verwendung einer Einbettungsmatrix kann der Heizdraht 48 auch mit einem dünnen Folienkleber an der Innenseite des Profils 36 befestigt werden. Als bevorzugter Heizdraht 48 ist ein einadriger Mantelheizleiter mit schlankem, kreisrunden Querschnitt eingesetzt. Alternativ kann auch eine Kohlefaserkordel (nicht dargestellt) als Heizelement verwendet werden. Diese kann z.B. mit Epoxidharz getränkt sein und zur elektrischen Isolierung z.B. mit Glaslagen umwickelt sein.

Anstelle des Heizdrahtes 48 kann die Wärmeabgabeeinrichtung 12 jedoch auch einen Piezoaktuator nutzen, der beispielsweise hochfrequent angesteuert wird und somit sowohl thermische als auch mechanische Energie abgibt. Ein solcher Piezoaktuator der hier nicht näher dargestellten weiteren Ausgestaltung ohne Heizdraht 48 sollte so ausgebildet sein, dass er die Wärme entlang der Wärmeabgabelinie 28 derart abgibt, dass eine Sollbruchstelle ausgebildet wird.

In weiter bevorzugter Ausgestaltung weist die Vorrichtung 10 neben der Wärmeabgabeeinrichtung 12 auch ein elektro-mechanisches Enteisungssystem 52 als weiteres Subsystem des hybriden Enteisungssystems 44 auf. Das elektro-mechanische Enteisungssystem 52 kann als ein Beispiel für die Verformungseinrichtung 40 angesehen werden. Vorzugsweise weist das elektro-mechanische Enteisungssystem 52 wenigstens einen Piezoaktuator 54 auf.

Besonders bevorzugt weist die Verformungseinrichtung 40 und deren elektro-mechanisches Enteisungssystem 52 eine erste Verformungseinheit 56 und eine zweite Verformungseinheit 57 auf. Die erste Verformungseinheit 56 dient zur Verformung eines ersten Abschnitts 38 des Oberflächenbereichs 14 auf einer ersten Seite der Wärmeabgabelinie 28. Bei dem in Fig. 2 dargestellten Beispiel, wo der Profilkörper 18 ein Teil des Flügels 22 ist, ist der erste Abschnitt 38 beispielsweise der oberhalb der Stagnationslinie 34 liegende Abschnitt des die Vorderkante 26 einschließenden Oberflächenbereichs 14. Dementsprechend wäre der zweite Abschnitt 39, der durch die zweite Verformungseinheit 57 zu verformen ist, in dem dargestellten Beispiel der unterhalb der Stagnationslinie 34 gelegene Abschnitt des Vorderkanten-Oberflächenbereichs 14.

Dementsprechend weist das elektro-mechanische Enteisungssystem 52 vorzugsweise wenigstens zwei Piezoaktuatoren 54, 55 auf, nämlich wenigstens einen ersten Piezoaktuator 54 für die erste Verformungseinheit 56 und wenigstens einen zweiten Piezoaktuator 55 für die zweite Verformungseinheit 57.

Dementsprechend ist zum Beispiel zum Aufbau eines elektro-mechanischen Enteisungssystems 52 der Einbau von wenigstens zwei Piezoaktuatoren 54, 55 im Bereich einer Vorderkante 26 eines aerodynamischen Profils 36, wie beispielsweise dem Profilkörper 18 eines Flügels 22, einer Leitwerksflosse oder eines Triebwerkseinlaufes 25, vorgesehen. Die Piezoaktuatoren 54, 55 liegen in Strömungsrichtung hinter dem durch den Heizdraht 48 definierten linienförmigen Wärmeabgabebereich - Wärmeabgabelinie 28. Sie dienen damit zur Entfernung von Eisackumulationen hinter dem Staupunkt des Profils 36 und zur Entfernung von Eisanlagerungen aus zurücklaufenden und erstarrenden Tropfen durch das elektrothermische System 46.

Als Piezoaktuatoren 54, 55 können insbesondere D33-Aktuatoren, beispielsweise mit einer Länge von ca. 30 mm, einer Breite von ca. 10 mm und einer Höhe von ca. 2 mm eingesetzt werden. Für nähere Einzelheiten in Bezug auf den Aufbau und einer möglichen Anordnung der Piezoaktuatoren wird ausdrücklich auf die WO 2007/071231 A1 verwiesen.

Um für eine möglichst effiziente mechanische Einkopplung in die Struktur zu sorgen, sind für die bevorzugten, z.B. quaderförmigen Piezoaktuatoren 54, 55 ebene Flächen zur Applikation auf der Innenseite des Profils 36 vorzusehen. Die bevorzugten, quaderförmigen Piezoaktuatoren 54, 55 sind insbesondere vorteilhaft, da sie als kostengünstige Standardbauteile erhältlich sind. Alternativ können auch formangepasste Piezoaktuatoren verwendet werden, welche die gleiche gekrümmte Kontur wie das Profil 36 vorweisen, um für eine möglichst effiziente mechanische Einkopplung in die Stuktur zu sorgen.

Die Vorrichtung 10 zur Enteisung und/oder Vermeidung von Eisbildung weist in der bevorzugten Ausgestaltung als hybrides Enteisungssystem 44 vorzugsweise auch eine Einrichtung zur Verminderung der Eisadhäsion an dem Oberflächenbereich 14 auf. Diese Einrichtung kann als weiteres Subsystem zur Enteisung angesehen werden. Insbesondere weist diese Einrichtung die Oberflächenbeschichtung 42 auf.

In bevorzugter Ausgestaltung wird der Oberflächenbereich 14 um die Vorderkante 26 des aerodynamischen Profils 36 oder zum Beispiel ein gesamter Oberflächenbereich des Profilkörpers 18 - beispielsweise der Flügel 22 - derart beschichtet, dass die Oberfläche minimale Adhäsionseigenschaften zwischen Eis (oder Wasser) und Profiloberfläche aufweist. Beispielsweise ist als Profilkörper 18 ein NACA-0012-Aluminium-Flügelprofil mit einer nano-strukturierten, superhydrophoben Oberflächenbeschichtung 42 im Bereich der Vorderkante 26 (z.B. Hydrobead) vorgesehen.

Fig. 2 zeigt demnach die bevorzugte Ausgestaltung der Vorrichtung 10 mit der mit dem Heizdraht 48 entlang der Stagnationslinie 34 versehenen Wärmeabgabeeinrichtung 12 als elektro-thermischem System 46, mit der mit Piezoaktuatoren 54, 55 gebildeten ersten und zweiten Verformungseinheit 56, 57 zum Verformen eines ersten Abschnitts und eines zweiten Abschnitts 38, 39 des Oberflächenbereichs 14 gebildeten Verformungseinrichtung 40 als elektro-mechanischem Enteisungssystem 52 und mit der Oberflächenbeschichtung 42 als weiterem Subsystem des hybriden Enteisungssystems 44.

Im Folgenden wird eine Funktionsweise eines derartigen hybriden Enteisungssystems 44 anhand der Darstellungen in den Fig. 3 und 4 näher erläutert.

Fig. 3 zeigt die Prinzipskizze des aerodynamischen Profils 36 am Beispiel des Profils des Flügels 22 mit einer vollständig durch Eis 30 bedeckten Vorderkante 26. Der angedeutete Heizdraht 48, welcher auf der Innenseite des Profils 36 auf Höhe der Stagnationslinie 34 aufgeklebt ist, wurde bei diesem Beispiel zu keiner Zeit elektro-thermisch beheizt. Selbst wenn nun durch Ansteuerung der angedeuteten piezoelektrischen Aktuatoren 54, 55 eine Bindung in der Grenzschicht zwischen Eis und der Oberfläche im Oberflächenbereich 14 des Profils 36 aufgebrochen wird, verbleibt die die Vorderkante 26 des Profils 36 umschließende Eisschicht dennoch an gleicher Stelle, da die aerodynamischen Kräfte der Strömung - dargestellt durch den Geschwindigkeitsvektor v - die Eisschicht weiterhin an die Vorderkante 26 des Profils 36 anpressen.

Dagegen zeigt die Fig. 4 eine Prinzipskizze des Profils 36 des beispielsweise den Flügel 22 bildenden Profilkörpers 18 mit - z.B. permanent - betriebenem Heizdraht 48, welcher auf der Innenseite des Profils 36 auf Höhe der Stagnationslinie 34 aufgeklebt ist. Das in zweidimensionaler Betrachtung punktuelle beziehungsweise in dreidimensionaler Betrachtung linienförmige Einbringen thermischer Energie generiert eine Sollbruchstelle beziehungsweise eine Sollbruchlinie 32, welche dem Zweck der Partitionierung beziehungsweise Aufspaltung der Akkumulation von Eis 30 an der Stagnationslinie 34 des Profils 36 des Flügels 22 in einen oberen Anteil 60 und einen unteren Anteil 61 der Eisschicht dient. Allgemeiner gesehen wird das Eis 30 entlang der Sollbruchlinie 32 in einen ersten Anteil 60 und einen zweiten Anteil 61 aufgeteilt. Dadurch können beide Eisanteile 60, 61 durch die angedeuteten piezoelektrischen Aktuatoren 54, 55 entfernt werden.

Die anhand den Fig. 3 und 4 ersichtliche Funktionsweise des hybriden Enteisungssystems 44 wird hiernach noch in näheren Einzelheiten am Beispiel einer möglichen Ausgestaltung eines - beispielsweise mit der Vorrichtung 10 durchführbaren - Verfahrens zur Enteisung oder zur Vermeidung von Eisbildung an Luftfahrzeugen näher erläutert.

Durch die Verwendung zum Beispiel eines Heizdrahtes 48 an der Stagnationslinie 34 des Profils 36 eines Flügels 22, einer Flosse, eines Triebwerkseinlaufes oder dergleichen, welcher Heizdraht 48 auf die Innenseite des Profils 36 aufgeklebt ist, wird thermische Energie in Spannweitenrichtung linienförmig an das Profil 36 übertragen. Allgemeiner erfolgt eine Wärmeabgabe einer Wärmeabgabeeinrichtung 12 bei dreidimensionaler Betrachtung linienförmig beziehungsweise punktuell bei zweidimensionaler Betrachtung wie in Fig. 4 dargestellt. Dies bedingt ein Aufschneiden der die Vorderkante 26 umschließenden Schicht Eis 30 und kann als bewusstes Einbringen einer Sollbruchstelle oder Sollbruchlinie 32 angesehen werden, welche dem Zweck der Partitionierung der Eisakkumulation in eine erste und eine zweite Eishälfte - zum Beispiel in eine obere Eishälfte und eine untere Eishälfte - dient.

Von besonderem Vorteil ist die gemeinsame Verwendung eines Heizdrahtes 48 zum Bilden des hybriden Enteisungssystems 44 in Kombination mit einer Verformung eines Oberflächenbereichs 14 des Profils 36 durch piezoelektrische Aktuatoren 54, 55.

Verzichtet man auf den Einsatz des Heizdrahtes 48, sind die Piezoaktuatoren 54, 55 zwar in der Lage, die Oberfläche des Profils 36 des Flügels 22 zu verformen und somit die Bindung in der Grenzfläche von Eis und Oberfläche aufzubrechen. Das von der Oberfläche gelöste Eis 30 wird jedoch aufgrund des aerodynamischen Staudrucks der Anströmung weiterhin an das Profil 36 des Flügels 22 angepresst. Somit wird der Oberflächenbereich 14 nicht final von Eisakkumulation befreit - siehe Fig. 3. durch die Partitionierung in mehrere Abschnitte oder Anteile 60, 61, zum Beispiel eine obere und eine untere Eishälfte, mit der Wärmeabgabeeinrichtung 12, beispielsweise mittels des Heizdrahtes 48, wird ein mögliches Problem eines Anpressens des Eises 30 an das Profil 36 umgangen - siehe hierzu Fig. 4 - und man kann sich zusätzlich den Effekt der aerodynamischen Anströmung des Profils 36 und der dadurch auf das Eis 30 wirkenden Kräfte zunutze machen.

Somit dient der Heizdraht 48 - im Gegensatz zu elektro-thermischen Systemen oder Wärmeabgabeeinrichtungen 102, die mit Heizmatten 110 arbeiten - nicht zur großflächigen thermischen Entfernung von Eisakkumulationen auf dem aerodynamischen Profil 36, wie beispielsweise des Flügels 22, sondern zum linienförmigen Aufbrechen der Eisschicht.

Dementsprechend weist ein zum Beispiel mit der Vorrichtung 10 durchführbares Verfahren zur Enteisung eines Oberflächenbereichs 14 eines Luftfahrzeuges 16 und/oder zum Vermeiden von Eisbildung an dem Oberflächenbereich 14 des Luftfahrzeuges 16 den Schritt Einbringung von Wärme entlang einer Linie an dem Oberflächenbereich 14 auf, um eine Sollbruchlinie 32 in sich an dem Oberflächenbereich 14 ansammelndem Eis 30 oder eine Trennlinie in sich an dem Oberflächenbereich ansammelnden Eis oder in sich an dem Oberflächenbereich akkumulierenden Wassertropfenansammlungen zu bilden.

Unter geschickter Ausnutzung der Anströmung kann so eventuell durch das Aufbrechen von Eis entlang einer Sollbruchlinie eine Eisentfernung stattfinden.

Mehr bevorzugt wird das Einbringen von Wärme entlang einer Wärmeabgabelinie 28 zum Bilden einer Sollbruchlinie 32 oder Trennlinie entlang einer Stagnationslinie 34 eines aerodynamischen Profils 36 durchgeführt.

Mehr bevorzugt weist das Verfahren weiter noch wenigstens einen der Schritte Verformen des Oberflächenbereichs 14, um Eis entlang der Sollbruchlinie 32 aufzubrechen und/oder um entlang der Sollbruchlinie 32 aufgebrochenes Eis oder sich auf den Seiten der Trennlinie akkumulierende Wasseransammlungen zu entfernen und/oder Vorsehen eines Oberflächenbereichs 14 mit einer Eisadhäsionskräfte herabsetzenden Oberflächenbeschaffenheit - insbesondere mittels einer entsprechenden Oberflächenbeschichtung 42 - auf.

In bevorzugter Ausgestaltung wird der Heizdraht 48 des elektro-thermischen Systems 46 im permanenten Running-Wet-Anti-Icing-Modus betrieben. Für einen niedrigeren Energieverbrauch kann der Heizdraht aber auch alternativ im zyklischen De-Icing-Modus betrieben werden, um das Entfernen der voneinander getrennten Anteile 60, 61 von Eis 30 auf dem Profil 36 mittels der Verformungseinrichtung 40 zu ermöglichen.

Die Verformung des Oberflächenbereich 14 erfolgt vorzugsweise durch Piezoaktuatoren 54, 55. Insbesondere erfolgt die Verformung der Oberfläche des Profils 36 durch Ansteuerung der Piezoaktuatoren 54, 55 im Bereich der Resonanzfrequenz der Struktur - hier wird vorzugsweise eine niedrige Ansteuerspannung bei einer Aufsetzspannung von 0 V eingesetzt - oder durch eine quasi-statische Anregung der Piezoaktuatoren - hier wird eine hohe Amplitude bei einer Aufsetzspannung >0 V vorzugsweise eingesetzt -, wodurch die Eisakkumulationen im Bereich in Strömungsrichtung hinter der Stagnationslinie 34 des Profils 36 entfernt werden.

Eine weitere mögliche Ansteuerung liegt in einer kontinuierlichen, dynamischen Ansteuerung der piezoelektrischen Aktuatoren 54, 55 mit einem Rechtecksignal mit definierter Flankensteilheit bei einer Wiederholfrequenz von beispielsweise 1 Hz. Über das Rechtecksignal wird die Flügelstruktur in Resonanz versetzt, dieser Effekt wirkt sich zu der statischen Auslenkung weiter positiv auf das Abplatzen des Eises 30 aus.

Bei Einbau von beispielsweise zwei oder mehreren Piezoaktuatoren 54, 55 jeweils auf dem ersten und dem zweiten Abschnitt 38, 39 des Profils 36 - beispielsweise auf der Oberseite und der Unterseite des Profils 36 des Flügels 22 - besteht des Weiteren die Möglichkeit, die Aktuatoren 54, 55 einzeln anzusteuern, um eine beliebige Schwingungsform auf der Oberfläche des Profils 36 zu erzeugen, beispielsweise eine Art Welle quer zur Oberfläche des Oberflächenbereichs 14.

Die Bewegungsrichtung der Piezoaktuatoren 54, 55 kann in Spannweitenrichtung oder Flugrichtung (D33-Effekt) oder flächig (D31-Effekt) erfolgen.

Durch die eisphoben Eigenschaften einer super-hydrophoben Beschichtung 42 werden die adhäsiven Bindungskräfte zwischen Eis 30 und der Oberfläche des Profils 36 auf ein Minimum reduziert. Dadurch wird eine energie-effiziente Entfernung aller Eisakkumulationen an dem Profil 36 ermöglicht.

Zum Funktionsnachweis wurde ein Vereisen eines Profils 36 des Flügels 22 unter realen Flugbedingungen in einem Vereisungswindkanal in Labormaßstab durchgeführt. Durch Verwendung aller drei Subsysteme des hybriden Enteisungssystems 44 wurden alle auf dem Flügelprofil anhaftenden Eisakkumulationen entfernt. Die drei Subsysteme wurden dabei gleichzeitig eingesetzt. Ein Vergleich des Energiebedarfs des hybriden Enteisungssystems 44 mit einem bereits für den Flugbetrieb zertifizierten Enteisungssystem - insbesondere einem rein elektro-thermischen Enteisungssystem 116 der in den Fig. 5 und 6 gezeigten Art - konnte eine sehr deutliche Energieeinsparung aufzeigen.

Vorstehend wurden Ausführungsbeispiele einer Vorrichtung 10 und eines Verfahrens zur Enteisung und/oder Vermeidung von Eisbildung an einem Oberflächenbereich 14 eines Luftfahrzeuges 16 näher erläutert. Die Erfindung ist selbstverständlich nicht auf die einzelnen dargestellten Ausführungsbeispiele beschränkt. Viele Abwandlungen können vorgenommen werden. Insbesondere können die drei Subsysteme auch jeweils einzeln oder in beliebiger Kombination zueinander eingesetzt werden.

Weitere Ausführungsbeispiel sind möglich und denkbar.

Einige Ausführungsbeispiele befassen sich mit einer Erniedrigung der Ausfallwahrscheinlichkeit.

So könnte die Wärmeabgabeeinrichtung 12 zur Sicherstellung der Redundanz eines hybriden Enteisungssystems 44 eine Mehrzahl von Heizdrähten 48 aufweisen.

Beispielsweise könnte ein Heizdraht 48 unmittelbar an der Stagnationslinie 34 vorgesehen sein und weitere Heizdrähte (nicht näher dargestellt) werden im Bereich um die Stagnationslinie 34 angeordnet.

Auch können jeweils mehrere Piezoaktuatoren 54, 55 auf den jeweiligen Abschnitten 38, 39 verwendet werden.

### Bezugszeichenliste:

- 10: Vorrichtung zur Enteisung und/oder Vermeidung von Eisbildung
- 12: Wärmeabgabeeinrichtung
- 14: Oberflächenbereich
- 16: Luftfahrzeug
- 18: Profil körper
- 20: Flugzeug
- 22: Flügel
- 24: Leitwerksflossen
- 25: Triebwerkseinlauf
- 26: Vorderkante
- 28: Wärmeabgabelinie
- 30: Eis
- 32: Sollbruchlinie
- 34: Stagnationslinie
- 36: aerodynamisches Profil
- 38: erster Abschnitt
- 39: zweiter Abschnitt
- 40: Verformungseinrichtung
- 42: Oberflächenbeschichtung
- 44: hybrides Enteisungssystem
- 46: elektro-thermisches System
- 48: Heizdraht
- 50: Epoxidharzmatrix
- 52: elektro-mechanisches Enteisungssystem
- 54: erster Piezoaktuator
- 55: zweiter Piezoaktuator
- 56: erste Verformungseinheit
- 57: zweite Verformungseinheit
- 60: erster Anteil der Eisschicht
- 61: zweiter Anteil der Eisschicht
- 100: Vorrichtung zur Enteisung und/oder Vermeidung von Eisbildung
- 102: Wärmeabgabeeinrichtung
- 104: Oberflächenbereich
- 106: Luftfahrzeug
- 108: Profil körper
- 110: Heizmatte
- 112: Vorderkante
- 114: Stagnationslinie
- 116: elektro-thermisches Enteisungssystem
- 118: Eis

## Patentansprüche

1. Vorrichtung (10) zur Enteisung und/oder Vermeidung von Eisbildung für ein Luftfahrzeug (16), mit einer Wärmeabgabeeinrichtung (12) zur Abgabe von Wärme an einen Oberflächenbereich (14) des Luftfahrzeuges (16), wobei die Wärmeabgabeeinrichtung (12) zur linienförmigen Wärmeabgabe zwecks Erzeugung einer Sollbruchstelle oder Sollbruchlinie (32) oder Trennlinie in sich auf dem Oberflächenbereich ansammelndem Eis ausgebildet ist und mit einer Verformungseinrichtung (40) zur Verformung zumindest eines Teils der Oberfläche des Oberflächenbereichs (42),
**dadurch gekennzeichnet, dass** die Verformungseinrichtung (40) wenigstens einen piezoelektrischen Aktuator (54, 55) oder eine Anordnung von piezoelektrischen Aktuatoren (54, 55) zur Verformung einer Oberfläche des Oberflächenbereichs umfasst, wobei der wenigstens eine piezoelektrische Aktuator als d₃₃-Stapelaktuator ausgebildet ist, dessen Ausdehungsrichtung in Spannweitenrichtung ausgerichtet ist.

2. Vorrichtung (10) nach Anspruch 1, **dadurch gekennzeichnet, dass** die Vorrichtung (10) als hybride Vorrichtung zur Enteisung und/oder Vermeidung von Eisbildung mittels thermischer und mechanischer Energie ausgebildet ist.

3. Vorrichtung nach Anspruch 1 oder 2, **dadurch gekennzeichnet, dass** die Verformungseinrichtung (40) eine erste Verformungseinheit (56) auf einer ersten Seite von einer Wärmeabgabelinie (28) der Wärmeabgabeeinrichtung (12), zur Verformung eines auf der ersten Seite befindlichen ersten Abschnitts (38) des Oberflächenbereichs (14) und eine zweite Verformungseinheit (57) auf der zweiten Seite von der Wärmeabgabelinie (28) zur Verformung eines auf der zweiten Seite befindlichen zweiten Abschnitts (39) des Oberflächenbereichs (14) umfasst.

4. Vorrichtung nach einem der Ansprüche 1 bis 3, **dadurch gekennzeichnet, dass** eine Eisdetektionseinrichtung vorgesehen ist, die ausgebildet ist, anhand einer von durch die Wärmeabgabeeinrichtung (12) und/oder durch wenigstens einen Aktuator (54, 55) erhaltenen Information eine Akkumulation von Eis zu detektieren.

5. Vorrichtung (10) nach einem der voranstehenden Ansprüche, **gekennzeichnet durch** eine Eisadhäsionskräfte herabsetzende Oberflächenbeschichtung (42) für den Oberflächenbereich (14).

6. Vorrichtung (10) nach einem der voranstehenden Ansprüche, **dadurch gekennzeichnet, dass** die Wärmeabgabeeinrichtung (12) wenigstens einen Heizdraht (48) und/oder wenigstens einen piezoelektrischen Aktuator (54, 55), der derart ausgebildet und eingerichtet ist, dass er zur linienförmigen Wärmeabgabe fähig ist, aufweist.

7. Profilkörper (18) für ein Luftfahrzeug (16), umfassend eine Vorrichtung (10) zur Enteisung und/oder Vermeidung von Eisbildung nach einem der voranstehenden Ansprüche.

8. Profilkörper (18) nach Anspruch 7, **dadurch gekennzeichnet, dass** die Wärmeabgabeeinrichtung (12) zur Erzeugung der Sollbruchlinie oder Trennlinie entlang oder in der Nähe einer Stagnationslinie (34) des Profilkörpers (18) und/oder entlang einer Vorderkante (26) des Profilkörpers (18) ausgebildet ist.

9. Profilkörper (18) nach Anspruch 7 oder Anspruch 8, **dadurch gekennzeichnet, dass** eine Verformungseinrichtung (40) vorgesehen ist, mittels der wenigstens ein Teil eines die Stagnationslinie (34) und/oder die Vorderkante (26) des Profilkörpers (18) einschließenden Oberflächenbereichs (14) des Profilkörpers (18) zum Entfernen von Eis oder Wasseransammlungen verformbar ist.

10. Profilkörper (18) nach einem der Ansprüche 7 bis 9, **dadurch gekennzeichnet, dass** ein die Stagnationslinie (34) und/oder die Vorderkante (26) des Profilkörpers (18) einschließender Oberflächenbereich (14) mit einer Eisadhäsionskräfte herabsetzenden Oberflächenbeschichtung (42) versehen ist.

11. Profilkörper (18) nach Anspruch 10, **dadurch gekennzeichnet, dass** der Oberflächenbereich (14) mit einer nanostrukturierten Oberfläche und/oder einer superhydrophoben Oberfläche versehen ist.

12. Luftfahrzeug (16) mit einer Vorrichtung (10) zur Enteisung und/oder Vermeidung von Eisbildung nach einem der Ansprüche 1 bis 6 und/oder mit einem aerodynamischen Profilkörper (18) nach einem der Ansprüche 7 bis 11.

13. Verfahren zur Enteisung eines Oberflächenbereichs (14) eines Luftfahrzeugs (16) und/oder Vermeidung von Eisbildung an dem Oberflächenbereich (14) des Luftfahrzeuges (16), durch Einbringung von Wärmeenergie an dem Oberflächenbereich (14), durch Einbringung von Wärme entlang einer Linie an dem Oberflächenbereich (14), um eine Sollbruchlinie (32) oder Trennungslinie in sich an dem Oberflächenbereich (14) ansammelndem Eis oder in sich an dem Oberflächenbereich (14) akkumulierenden Wassertropfenansammlungen zu bilden,
**gekennzeichnet durch** Verformen des Oberflächenbereichs (14) mittels als d₃₃-Stapelaktuator ausgebildeter Piezo-Aktuatoren (54, 55), deren Ausdehungsrichtung in Spannweitenrichtung ausgerichtet ist, um Eis entlang der Sollbruchlinie (32) aufzubrechen und/oder um entlang der Sollbruchlinie (32) oder Trennlinie aufgebrochenes Eis und/oder Wassertropfen zu entfernen.

14. Verfahren nach Anspruch 13, **gekennzeichnet durch** den Schritt:
- Versehen oder Vorsehen des Oberflächenbereichs (14) mit einer Eisadhäsionskräfte herabsetzenden Oberflächenbeschichtung (42) und/oder einer Eisadhäsionskräfte herabsetzenden Oberflächenbeschaffenheit.

## Claims

1. Device (10) for de-icing and/or avoiding ice formation for an aircraft (16), with a heat emitting device (12) for emitting heat onto a surface region (14) of the aircraft (16), wherein the heat emitting device (12) is designed for linear heat emission for the purpose of producing a predetermined breaking point or a predetermined breaking line (32) or parting line in ice accumulating on the surface region, and with a deformation device (40) for deforming at least part of the surface of the surface region (42),
**characterized in that** the deformation device (40) comprises at least one piezoelectric actuator (54, 55) or an arrangement of piezo electric actuators (54, 55) for deforming a surface of the surface region, wherein the at least one piezoelectric actuator is designed as a d33 stack actuator, the direction of extent of which is aligned in the spanwise direction.

2. Device (10) according to Claim 1, **characterized in that** the device (10) is designed as a hybrid device for de-icing and/or avoiding ice formation by means of thermal and mechanical energy.

3. Device according to Claim 1 or 2, **characterized in that** the deformation device (40) comprises a first deformation unit (56) on a first side of a heat emitting line (28) of the heat emitting device (12), for deforming a first portion (38) of the surface region (14) located on the first side, and a second deformation unit (57) on the second side of the heat emitting line (28), for deforming a second portion (39) of the surface region (14) located on the second side.

4. Device according to one of Claims 1 to 3, **characterized in that** an ice detection device is provided, which is designed to detect an accumulation of ice on the basis of information obtained from by the heat emitting device (12) and/or at least one actuator (54, 55) .

5. Device (10) according to one of the preceding claims, **characterized by** a surface coating (42), reducing ice adhesion forces, for the surface region (14).

6. Device (10) according to one of the preceding claims, **characterized in that** the heat emitting device (12) has at least one heating wire (48) and/or at least one piezoelectric actuator (54, 55), which is designed and set up in such a way that it is capable of linear heat emission.

7. Profiled body (18) for an aircraft (16), comprising a device (10) for de-icing and/or avoiding ice formation according to one of the preceding claims.

8. Profiled body (18) according to Claim 7, **characterized in that** the heat emitting device (12) is designed for producing the predetermined breaking line or parting line along or in the vicinity of a stagnation line (34) of the profiled body (18) and/or along a leading edge (26) of the profiled body (18).

9. Profiled body (18) according to Claim 7 or Claim 8, **characterized in that** a deformation device (40) is provided, by means of which at least part of a surface region (14) of the profiled body (18) that encloses the stagnation line (34) and/or the leading edge (26) of the profiled body (18) can be deformed for removing ice or collections of water.

10. Profiled body (18) according to one of Claims 7 to 9, **characterized in that** a surface region (14) enclosing the stagnation line (34) and/or the leading edge (26) of the profiled body (18) is provided with a surface coating (42) reducing ice adhesion forces.

11. Profiled body (18) according to Claim 10, **characterized in that** the surface region (14) is provided with a nanostructured surface and/or a superhydrophobic surface.

12. Aircraft (16) with a device (10) for de-icing and/or avoiding ice formation according to one of Claims 1 to 6 and/or with an aerodynamic profiled body (18) according to one of Claims 7 to 11.

13. Method for de-icing a surface region (14) of an aircraft (16) and/or avoiding ice formation on the surface region (14) of the aircraft (16), by introducing thermal energy on the surface region (14), by introducing heat along a line on the surface region (14), in order to form a predetermined breaking line (32) or parting line in ice collecting on the surface region (14) or in collections of water droplets accumulating on the surface region (14),
**characterized by** deforming the surface region (14) by means of piezo actuators (54, 55), designed as d33 stack actuators, the direction of extent of which is aligned in the spanwise direction, in order to break up ice along the predetermined breaking line (32) and/or in order to remove ice and or water droplets broken up along the predetermined breaking line (32) or parting line.

14. Method according to Claim 13, **characterized by** the step of:
- providing the surface region (14) with a surface coating (42) reducing ice adhesion forces and/or a surface finish reducing ice adhesion forces.

## Revendications

1. Dispositif (10) de dégivrage et/ou de prévention contre la formation de glace pour un aéronef (16), comprenant un système de diffusion de chaleur (12) pour diffuser de la chaleur sur une région de surface (14) de l'aéronef (16), le système de diffusion de chaleur (12) étant réalisé pour délivrer de la chaleur sous forme linéaire en vue de la génération d'une zone destinée à la rupture ou d'une ligne destinée à la rupture (32) ou d'une ligne de séparation dans de la glace s'accumulant sur la région de surface, et comprenant un système de déformation (40) pour déformer au moins une partie de la surface de la région de surface (42),
**caractérisé en ce que** le système de déformation (40) comprend au moins un actionneur piézoélectrique (54, 55) ou un agencement d'actionneurs piézoélectriques (54, 55) pour déformer une surface de la région de surface, l'au moins un actionneur piézoélectrique étant réalisé sous forme d'actionneur à empilement d₃₃, dont la direction d'étendue est orientée dans le sens de l'envergure.

2. Dispositif (10) selon la revendication 1, **caractérisé en ce que** le dispositif (10) est réalisé sous forme de dispositif hybride pour le dégivrage et/ou pour la prévention contre la formation de glace au moyen d'énergie thermique et mécanique.

3. Dispositif selon la revendication 1 ou 2, **caractérisé en ce que** le système de déformation (40) comprend une première unité de déformation (56) sur un premier côté d'une ligne de diffusion de chaleur (28) du système de diffusion de chaleur (12), pour la déformation d'une première portion (38) de la région de surface (14) se trouvant sur le premier côté et une deuxième unité de déformation (57) sur le deuxième côté de la ligne de diffusion de chaleur (28) pour la déformation d'une deuxième portion (39) de la région de surface (14) se trouvant sur le deuxième côté.

4. Dispositif selon l'une quelconque des revendications 1 à 3, **caractérisé en ce qu'**il est prévu un système de détection de glace qui est réalisé pour détecter une accumulation de glace à l'aide d'une information obtenue de par le système de diffusion de chaleur (12) et/ou par au moins un actionneur (54, 55).

5. Dispositif (10) selon l'une quelconque des revendications précédentes, **caractérisé par** un revêtement de surface (42) pour la région de surface (14), diminuant les forces d'adhésion de la glace.

6. Dispositif (10) selon l'une quelconque des revendications précédentes, **caractérisé en ce que** le système de diffusion de chaleur (12) présente au moins un filament chauffant (48) et/ou au moins un actionneur piézoélectrique (54, 55) qui est réalisé et prévu de manière à être apte à diffuser de la chaleur sous forme linéaire.

7. Corps profilé (18) pour un aéronef (16), comprenant un dispositif (10) de dégivrage et/ou de prévention contre la formation de glace selon l'une quelconque des revendications précédentes.

8. Corps profilé (18) selon la revendication 7, **caractérisé en ce que** le système de diffusion de chaleur (12) est réalisé pour générer la ligne destinée à la rupture ou la ligne de séparation le long ou à proximité d'une ligne de stagnation (34) du corps profilé (18) et/ou le long d'une arête avant (26) du corps profilé (18).

9. Corps profilé (18) selon la revendication 7 ou la revendication 8, **caractérisé en ce qu'**un système de déformation (40) est prévu, au moyen duquel au moins une partie d'une région de surface (14) du corps profilé (18) incluant la ligne de stagnation (34) et/ou l'arête avant (26) du corps profilé (18) peut être déformée pour enlever de la glace ou des accumulations d'eau.

10. Corps profilé (18) selon l'une quelconque des revendications 7 à 9, **caractérisé en ce qu'**une région de surface (14) incluant la ligne de stagnation (34) et/ou l'arête avant (26) du corps profilé (18) est pourvue d'un revêtement de surface (42) réduisant les forces d'adhésion de la glace.

11. Corps profilé (18) selon la revendication 10, **caractérisé en ce que** la région de surface (14) est pourvue d'une surface nanostructurée et/ou d'une surface superhydrophobe.

12. Aéronef (16) comprenant un dispositif (10) de dégivrage et/ou de prévention contre la formation de glace selon l'une quelconque des revendications 1 à 6 et/ou comprenant un corps profilé aérodynamique (18) selon l'une quelconque des revendications 7 à 11.

13. Procédé de dégivrage d'une région de surface (14) d'un aéronef (16) et/ou de prévention contre la formation de glace sur la région de surface (14) de l'aéronef (16), par introduction d'énergie thermique au niveau de la région de surface (14), par introduction de chaleur le long d'une ligne sur la région de surface (14), afin de former une ligne destinée à la rupture (32) ou une ligne de séparation dans de la glace s'accumulant sur la région de surface (14) ou dans des accumulations de gouttes d'eau s'accumulant sur la région de surface (14),
**caractérisé par** la déformation de la région de surface (14) au moyen d'actionneurs piézoélectriques (54, 55) réalisés sous forme d'actionneur à empilement d₃₃, dont la direction d'étendue est orientée dans le sens de l'envergure, afin de casser la glace le long de la ligne destinée à la rupture (32) et/ou d'enlever la glace rompue et/ou les gouttes d'eau le long de la ligne destinée à la rupture (32) ou de la ligne de séparation.

14. Procédé selon la revendication 13, **caractérisé par** l'étape suivante :
- prévision ou équipement de la région de surface (14) avec un revêtement de surface (42) réduisant les forces d'adhésion de la glace et/ou avec une structuration de surface réduisant les forces d'adhésion de la glace.
